**Europäisches Patentamt**

**European Patent Office**

**Office européen des brevets**

(19)

(11) Veröffentlichungsnummer: **0 061 767**
**B1**

(12) **EUROPÄISCHE PATENTSCHRIFT**

(45) Veröffentlichungstag der Patentschrift:
**30.05.84**

(51) Int. Cl.³: **G 11 B 15/66**

(21) Anmeldenummer: **82102651.5**

(22) Anmeldetag: **29.03.82**

(54) Verriegelungseinrichtung für eine Magnetbandkassette in einem Magnetbandgerät.

(30) Priorität: **31.03.81 DE 3112845**

(43) Veröffentlichungstag der Anmeldung:
**06.10.82 Patentblatt 82/40**

(45) Bekanntmachung des Hinweises auf die Patenterteilung:
**30.05.84 Patentblatt 84/22**

(84) Benannte Vertragsstaaten:
**DE GB**

(56) Entgegenhaltungen:
**DE - A - 2 429 154**
**DE - A - 2 546 461**
**DE - B - 1 216 936**
**US - A - 4 014 042**
**US - A - 4 156 260**

(73) Patentinhaber: **TANDBERG DATA A/S,**
**Kjelsasveien 161 Postboks 9 Korsvoll, N-Oslo 8 (NO)**

(72) Erfinder: **Rudi, Guttorm, Edvard Griegsv.17,**
**N-1472 Fjellhamar (NO)**

(74) Vertreter: **Mehl, Ernst, Dipl.-Ing. et al, Postfach 22 01 76,**
**D-8000 München 22 (DE)**

## Beschreibung

Die Erfindung betrifft eine Verriegelungseinrichtung für eine auf ihrer Unterseite zwei Eingriffe für Drehkörper aufweisende Magnetbandkassette in einem, eine rechteckige Grundfläche aufweisenden Einschubkanal eines Magnetbandgerätes, mit einer Arretiereinrichtung zum Halten der Magnetbandkassette in einer Referenzposition und mit einer Auswerfeinrichtung.

Beim Abtasten eines Magnetbandes mit einem Magnetkopf in einem Magnetbandgerät ist es zum störungsfreien Betrieb notwendig, dass das Magnetband und der Abtastkopf in einer definierten Lage zueinander angeordnet sind. Dazu ist eine Anzahl von Referenzanschlägen vorgesehen. Ihre Anzahl und ihre Lage ist beispielsweise im ECMA Standard Nr. 46 angegeben. Es besteht jedoch die Gefahr dass sich die Magnetbandkassette während des Abtastens in ihrer Lage gegenüber den Referenzanschlägen bzw. dem Abtastkopf verändert, wenn sie nicht ausreichend gesichert ist.

Dazu ist eine Arretiereinrichtung bekannt, welche zwei federgespannte, von unten ständig in den Einschubkanal reichende Rollen aufweist. Wenn eine Magnetbandkassette eingeschoben ist, greifen sie in deren Eingriffe ein und halten sie somit fest. Nachteilig dabei ist, dass verhältnismässig viel Kraft erforderlich ist, um die Magnetbandkassette in den Einschubkanal ein- bzw. auszuführen, da dabei die Federkraft der Rollen überwunden werden muss. Ausserdem wird die Magnetbandkassette nur gegen zwei der Referenzanschläge gedrückt, so dass nur eine beschränkte Arretierung erreicht wird. Da sie ausserdem bereits beim Ein- bzw. Ausführen an die beiden Referenzanschläge gedrückt wird, unterliegt sie an den Berührungspunkten einer hohen Abnutzung.

Diese Nachteile vermeidet eine weitere bekannte Arretiereinrichtung, welche drei federgespannte, mit Rollen versehene Arme und einen Motor aufweist. Der Motor treibt zwei Nockenscheiben an, welche zwei der Arme ausserhalb des Einschubkanals hält, bis eine Kassette eingeschoben ist und von einem Positionsfühler ein Steuersignal zum Verriegeln gegeben wird, bzw. wenn von einer Bedienungsperson ein Steuersignal zum Entriegeln gegeben wird. Der dritte Arm wird solange durch eine mit den beiden ersten Armen verbundene Feder ausserhalb des Einschubkanals gehalten. Die Arretierung erfolgt dadurch, dass durch Drehen der Nockenscheiben die Sperre der beiden ersten Arme gelöst wird, so das sie von ihrer Federspannung in den Einschubkanal und gegen die Unterseite der Magnetbandkassette gedrückt werden. Gleichzeitig drückt die Nockenscheibe den dritten Arm ebenfalls in den Einschubkanal und gegen die Magnetbandkassette. Nachteilig ist der durch die Verwendung des Motors entstehende grosse Raumbedarf. Auserdem erfordert die Montage der grossen Anzahl von Einzelteilen einen erheblichen Zeitaufwand. Bei beiden Arretiervorrichtungen besteht die Gefahr, dass sich die Magnetbandkassette aus der Referenzposition löst, wenn eine äussere Kraft auf sie einwirkt, welche die Federkräfte neutralisiert.

Der Erfindung lag daher die Aufgabe zugrunde, eine Verriegelungseinrichtung der oben genannten Art anzugeben, welche eine geringe Anzahl von Einzelteilen benötigt und welche einen Motor sowie einen Positionsfühler samt der dazugehörigen Steuereinrichtung erübrigt.

Diese Aufgabe wird dadurch gelöst, dass die Arretiereinrichtung aus einem, in einer zur Grundfläche senkrecht angeordneten Drehachse gelagerten, einen Sperrarm und einen Schubarm aufweisenden Hebel und aus einem in einem Winkel zur Grundfläche bewegbar angeordneten, über ein Keilgetriebe mit dem Schubarm verbundenen und mindestens drei Drehkörper aufweisenden Träger besteht, dass die Auswerfeinrichtung aus einem mit dem Hebel verbundenen Auswerfarm und einem daran angebrachten Mitnehmer besteht, und dass der Hebel mit einem zwei stabile Zustände einnehmenden Federelement verbunden ist.

Die Verriegelungseinrichtung hat den Vorteil, dass fast kein Kraftaufwand notwendig ist, um die Magnetbandkassette in den Einschubkanal einzuführen bzw. herauszunehmen. Es tritt auch keine Abnutzung der Magnetbandkassette durch Reibung an den Referenzanschlägen auf. Die Kassette ist vollständig in den Einschubkanal einführbar, so dass sie mit einer Frontplatte des Magnetbandgerätes fluchtet. Bei der Arretierung wird sie gegen mindestens drei Referenzanschläge gedrückt, so dass sie sicher in der Referenzposition gehalten ist. Die Arretierung der Magnetbandkassette erfolgt selbsttätig. Ein Motor ist entbehrlich. Es wird eine sichere Arretierung erreicht, die verhindert, dass sich die Magnetbandkassette von allein oder durch Einwirkung äusserer Kräfte löst, es sei denn der Auswerfarm wird bewusst betätigt. Die Auswerfeinrichtung kann erst dann wirken, wenn die Arretiereinrichtung gelöst ist.

Weiterbildungen der Erfindung ergeben sich aus den Unteransprüchen.

Im folgenden wird die Erfindung anhand eines bevorzugten Ausführungsbeispieles weiter beschrieben.

Fig. 1 zeigt eine Anordung einer Magnetbandkassette in einem Einschubkanal

Fig. 2 zeigt eine schematische Ansicht einer Verriegelungseinrichtung und ihre Anordnung in einem Magnetbandgerät

Fig. 3 zeigt ein Ausführungsbeispiel eines Hebels

Fig. 4 zeigt eine Seitenansicht der Verriegelungseinrichtung

Fig. 5 zeigt eine Draufsicht der Verriegelungseinrichtung.

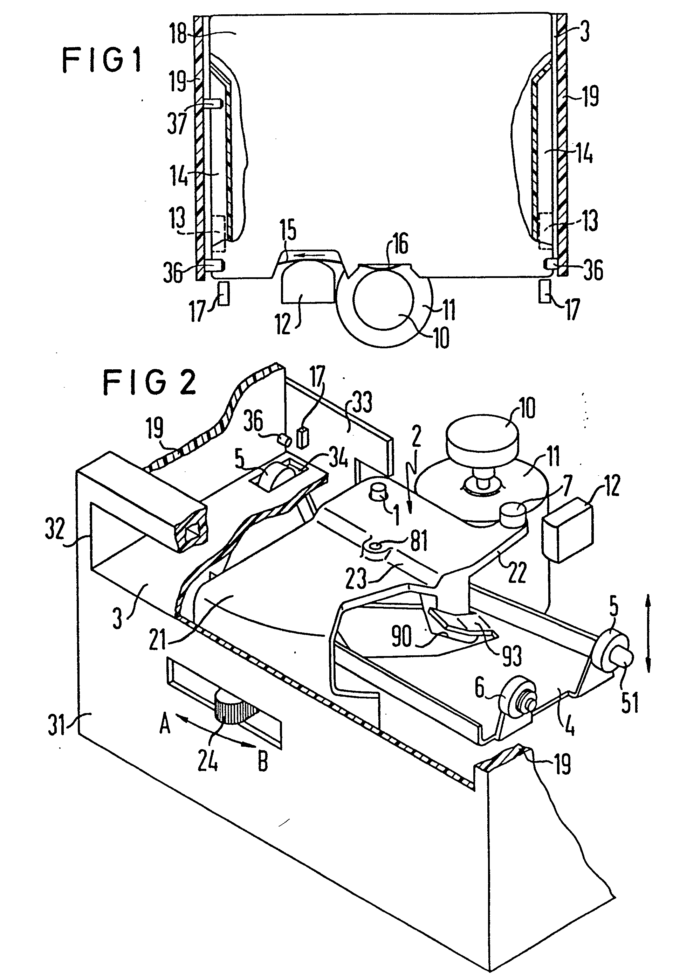

In Fig. 1 ist eine Magnetbandkassette 18 dargestellt, die in einen Einschubkanal eines Magnetbandgerätes eingeführt ist. Der Einschubkanal wird von einer Grundfläche 3 und zwei Seitenwänden 19 begrenzt. An der Stirnseite 20 der Magnetbandkassette 18 sind ein Magnetbandtransportmotor 11 mit einer Antriebsrolle 10, ein Magnetkopf 12, sowie zwei Anschläge 17 angeordnet. Ein Magnetband 15 ist zwischen der Antriebsrolle 10 und einer Druckrolle 16 geführt und läuft in Pfeilrichtung am Magnetkopf 12 vorbei. Die Magnetbandkassette 18 weist an ihrer Unterseite zwei Eingriffe 13 auf. Ausserdem sind entlang den Seitenwänden 19 Führungsrillen 14 in der Magnetbandkassette 18. Diese nehmen beim Einschieben der Magnetbandkassette 18 in den Einschubkanal an den Seitenwänden 19 angebrachte Referenzanschläge 36, 37 auf. Diese Anordnung der Magnetbandkassette 18 im Einschubkanal ist als Referenzposition bezeichnet. Zwei nahe den Anschlägen 17 angeordnete Referenzanschläge 36, 37 sind als vordere Referenzanschläge 36 bezeichnet. Ein dritter ist als hinterer Referenzanschlag 37 bezeichnet.

In Fig. 2 ist das Gehäuse 31 des Magnetbandgerätes teilweise geschnitten, so dass die Verriegelungseinrichtung deutlich wird. Der Einschubkanal mit der Grundfläche 3 und den Seitenwänden 19 ist an der Vorderseite des Gehäuses 31 mit einer Einschuböffnung 32 zum Einführen der Magnetbandkassette 18 versehen. Unter der Grundfläche 3 ist ein Hebel 2 angeordnet. Er ist in einer Drehachse 1 gelagert, welche zur Grundfläche 3 senkrecht steht. Der Hebel 2 weist einen Sperrarm 21, einen Auswerfarm 22 und einen Schubarm 23 auf. An diesem ist ein Keil 90 angeordnet. Das Ende des Sperrarmes 21 bildet ein Schubgriff 24, welcher aus dem Gehäuse 31 herausgeführt ist.

Zwischen dem Hebel 2 und dem Gehäuse 31 ist ein zwei stabile Zustände einnehmendes Federelement angeordnet. Es hält den Hebel 2 bzw. den Sperrarm 21 in einer von zwei stabilen Stellungen. Die Stellung A entspricht dem Zustand «nicht verriegelt», die Stellung B entspricht dem Zustand «verriegelt». Um das Federelement von einem stabilen Zustand in den anderen zu bringen, ist bis zum Erreichen eines Totpunktes eine Federkraft zu überwinden.

Unterhalb des Hebels 2 ist ein wagenartiger Träger 4 angeordnet. Er weist drei Drehkörper 5, 6 und einen Lappen 93 für den Eingriff des Keiles 90 auf. Magnetbandtransportmotor 11, Antriebsrolle 10, Magnetkopf 12 und Anschlag 17 sind auf bekannte Weise am Gehäuse 31 angeordnet, was deshalb im einzelnen nicht dargestellt ist. Die Anschläge 17 sind auf einer Rückreise 33 des Einschubkanals angebracht.

Der Keil 90 und der Lappen 93 bilden zusammen ein Keilgetriebe 90, 93. Zusammen mit den Sperrarm 21 und den Schubarm 23 aufweisenden Hebel 2 sowie mit dem die Drehkörper 5, 6 aufweisenden Träger 4 bildet es eine Arretiereinrichtung zum Halten der Magnetbandkassette 18 in der Referenzposition. Der Auswerfarm 22 und ein daran angebrachter Mitnehmer 7 bilden eine Auswerfeinrichtung, mit welcher eine in den Einschubkanal eingeführte Magnetbandkassette 18 beim Schieben des Schubgriffes 24 von Stellung B in Stellung A von dem Federelement 8 zumindest teilweise aus dem Einschubkanal ausgeworfen wird.

Die Grundfläche 3 weist drei Durchgriffe 34 auf. Zwei davon sind so angeordnet, dass sie bei einer eingeführten Magnetbandkassettte 18 unter den Eingriffen 13 liegen. Sie sind in Einschubrichtung nach vorne und hinten länger als die Eingriffe 13 ausgebildet. Wie sich aus Fig. 1 ergibt, liegen sie in der Nähe der vorderen Referenzanschläge 36. Sie sind als vordere Durchgriffe bezeichnet. In der Nähe des hinteren Referenzanschlages 37 ist ein weiterer Durchgriff 34 angeordnet. Er ist als hinterer Durchgriff bezeichnet. Seine Grösse ist unabhängig von der Grösse der Eingriffe 13. Zwei der Drehkörper 5, 6 liegen direkt unter den vorderen Durchgriffen (vordere Drehkörper 5). Ein hinterer Drehkörper 6 liegt unter dem hinteren Durchgriff. Die Achsen der vorderen Drehkörper 5 liegen auf einer gedachten Linie und weisen jeweils eine über den Träger 4 hinausragende Achsverlängerung 51 auf. Der hintere Drehkörper 6 ist seitlich versetzt zu einem der vorderen Drehkörper 5 angeordnet. Die Drehrichtung aller Drehkörper 5, 6 ist natürlich gleich der Einschubrichtung. Sie liegen auf einem nicht dargestellten Gehäuseteil auf. Die Achsverlängerungen 51 sind jeweils in einer zur Grundfläche 3 senkrecht verlaufenden Nute (nicht dargestellt) geführt, so dass der Träger 4 nur in dieser Richtung bewegbar ist.

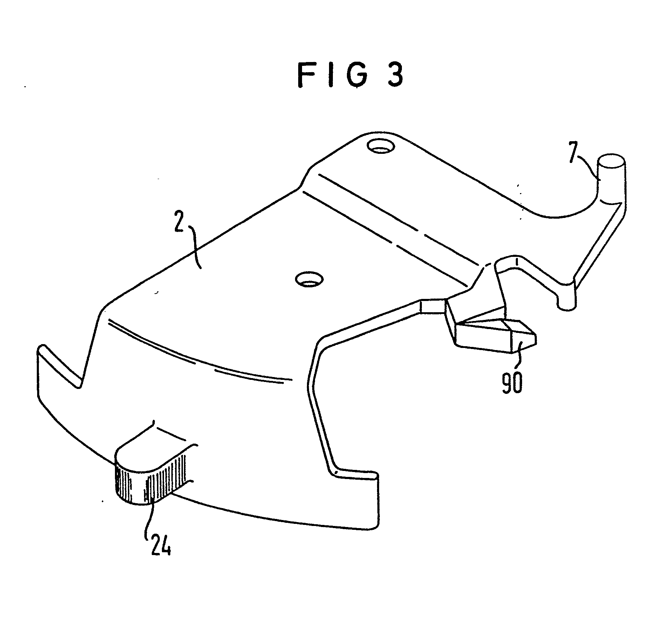

Fig. 3 zeigt eine vorteilhafte Ausbildung des Keils 90. Er ist aus einem Kunststoffmaterial mit guten Gleiteigenschaften gebildet.

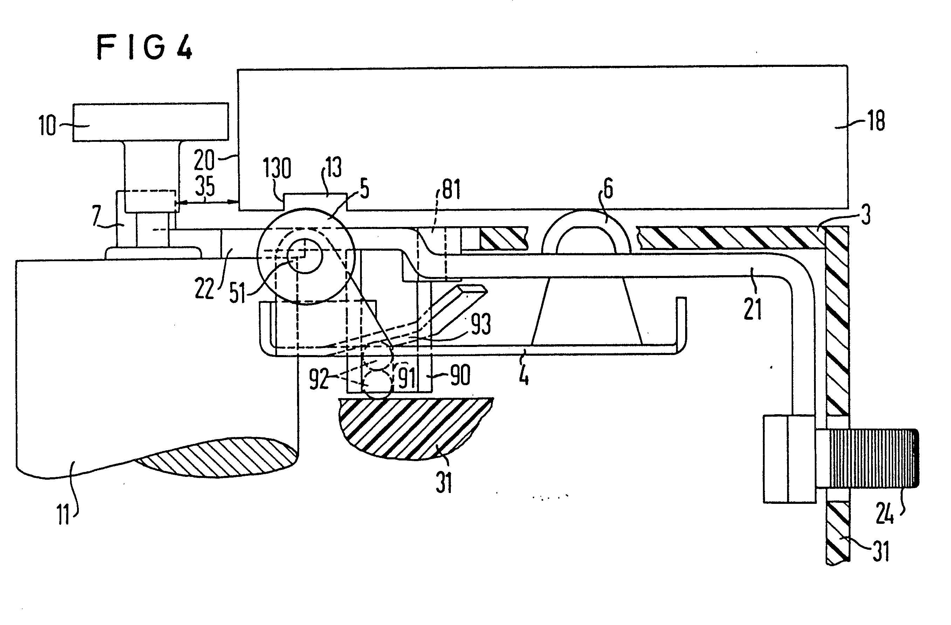

In Fig. 4 ist eine weitere Ausbildung des Keilgetriebes 90, 93 dargestellt. Der Keil 90 weist eine Kugellagerung mit einem Lagergehäuse 91 und zwei Kugeln 92 auf. Das Lagergehäuse 91 ist als vertikal verlaufender, zylinderförmiger Hohlraum ausgebildet. Die Kugeln 92 sind darin übereinanderliegend angeordnet, wobei ein Kugelabschnitt jeder Kugel 92 aus dem Hohlraum ragt. Der unteren Kugel dient ein Teil des Gehäuses 31 als Lauffläche. Der oberen Kugel dient der Lappen 93 als Lauffläche.

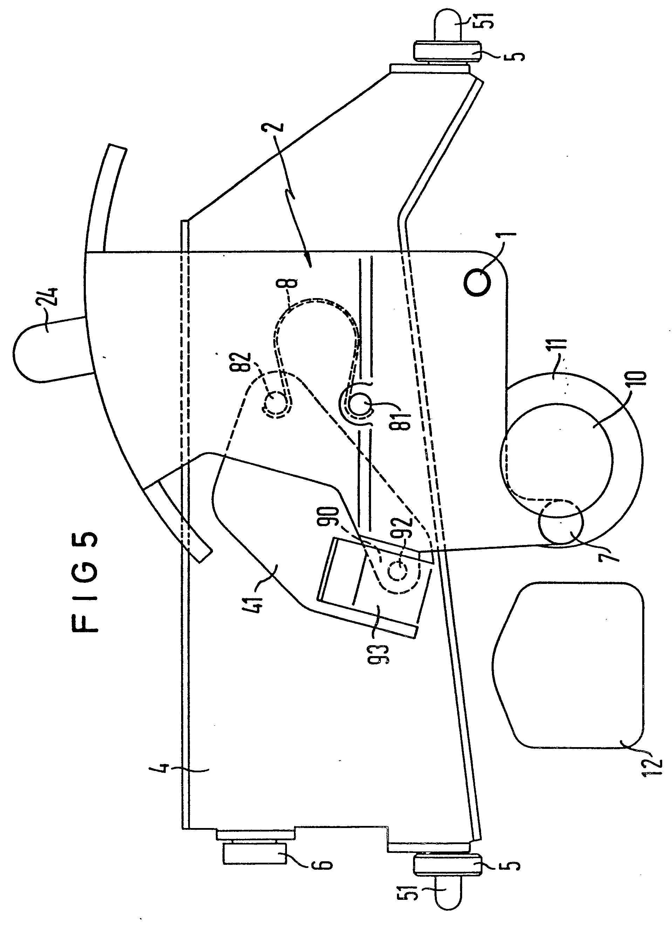

Fig. 5 zeigt im wesentlichen eine Draufsicht auf dem Hebel 2 und den Träger 4. Deren geometrische Abmessungen ergeben sich aus der Anordnung im Magnetbandgerät. Sie sind für die Funktion jedoch nicht entscheidend. Ein erster Bolzen 81 ist aus der Unterseite des Hebels 2 herausgeführt. Er dient zum Befestigen des als Schnappfeder ausgebildeten Federelementes 8. Sie ist an ihrem anderen Ende an einem zweiten Bolzen 92 gehalten, welcher am Gehäuse 31 befestigt ist. Der Träger 4 weist eine Öffnung 41 auf, um Raum für den Keil 90 und seine Bewegungen zu schaffen. Der Mitnehmer 7 ist zwischen Magnetkopf 12 und Antriebsrolle 10 angeordnet. Anhang der Figuren wird im folgenden die Funktion der Verriegelungseinrichtung beschrieben. Die Magnetbandkassette 18 wird bei Stellung A des Schubgriffes 24 durch die Einschuböffnung 32 vollständig in den Einschubkanal eingeführt. In dieser Stellung befindet sich der Mitnehmer 7 im Einschubkanal. Die Stirnfläche 20 der Magnetbandkassette 18 schiebt ihn nach hinten aus dem Einschubkanal heraus. Dabei wird über den Hebel 2 das Federelement 8 gespannt, bis es den Totpunkt überwindet. Dann wird Federkraft frei und das Federelement 8 nimmt seinen zweiten stabilen Zustand ein. Dabei bringt es selbsttätig den Hebel 2 bzw. den Schubgriff 24 von Stellung A in Stellung B. Da ausserdem dadurch gleichzeitig der Schubarm 23 bewegt wird, wird der Keil 90 selbsttätig unter den Lappen 93 geschoben.

Die Lage des Mitnehmers 7 im stabilen Zustand, welcher der Stellung B des Schubgriffes 24 entspricht, ist durch einen Abstand von der Stirnseite 20 der Magnetbandkassette 18 gekennzeichnet. Dieser Abstand ist als Pufferstrecke 35 bezeichnet.

Die horizontale Verschiebung des Keils 90 wird in eine vertikale Verschiebung des Trägers 4 gewandelt. Da die vorderen Druckkörper 5 unterhalb der Eingriffe 13 und deren Vorderkante 130 angeordnet sind, kommen sie bei der vertikalen Bewegung mit der Vorderkante 130 in Berührung und üben dadurch eine Kraft auf die Magnetbandkassette 18 aus. Die Kraft hat eine horizontale und eine vertikale Komponente, d.h. die Magnetbandkassette 18 wird gleichzeitig tiefer in den Einschubkanal und nach oben gedrückt, bis sie fest an den beiden vorderen Referenzanschlägen 36 und den Anschlägen 17 anliegt. Gleichzeitig übt der hintere Drehkörper 6 eine vertikale Kraft auf den Boden der Magnetbandkassette 18 aus und drückt sie damit an den hinteren Referenzanschlag 37. Die Kräfte der vorderen Drehkörper 5 auf die Magnetbandkassette 18 sind gleich gross und grösser als die Kraft des hinteren Drehkörpers 6.

Die Magnetbandkassette ist sicher und in der definierten Referenzposition fixiert. Der Keil 90 verhindert formschlüssig eine vertikale Bewegung des Trägers 4. Die Magnetbandkassette 18 kann also ohne Entfernung des Keiles 90 nicht aus der Referenzposition bewegt werden. Es kann nur eine vertikale Kraftkomponente auf den keil übertragen werden. In der in FIG 4 dargestellten Ausbildungsform wird diese Kraft über die Kugeln 92 auf das Gehäuse 31 gelenkt. Der Keil 90 wird durch das Federelement 8 in seiner Lage gehalten.

Zum Auswerfen der Magnetbandkassette 18 aus dem Einschubkanal wird der Schubgriff 24 von Stellung B nach Stellung A gebracht. Der Keil 90 wird dadurch ausser Eingriff mit dem Lappen 93 gebracht. Der Träger 4 bewegt sich dadurch nach unten und löst die Verbindung der Drehkörper 5, 6 mit der Magnetbandkassette 18. Anschliessend wird die Auserfeinrichtung betätigt, wie im folgenden Absatz beschrieben ist.

Der Mitnehmer 7 hat eine solche Länge, dass er über die Unterkante der Magnetbandkassette 18 reicht. Die Pufferstrecke 35 ist so bemessen, dass bei Verschieben des Hebels 2 von Stellung B in Stellung A der Mitnehmer 7 erst dann in Berührung mit der Stirnseite 20 kommt, wenn der Keil 90 ausser Eingriff mit dem Lappen 93 ist. Erst dann übt er eine auf die Einschuböffnung 32 gerichtete Kraft auf die Magnetbandkassette 18 aus und schiebt diese eine Strecke aus dem Einschubkanal heraus. Sie kann dann nahezu ohne Kraftaufwand vollständig aus dem Einschubkanal entnommen werden, da die zum Auswerfen erforderliche Kraft durch Lösung der Spannung des Federelementes 8 frei wird.

**Patentansprüche**

1. Verriegelungseinrichtung für eine auf ihrer Unterseite zwei Eingriffe (13) für Drehkörper (5,6) aufweisende Magnetbandkassette (18) in einem, eine rechteckige Grundfläche (3) aufweisenden Einschubkanal eines Magnetbandgerätes, mit einer Arretiereinrichtung zum Halten der Magnetbandkassette in einer Referenzposition und mit einer Auswerfeinrichtung, dadurch gekennzeichnet, dass die Arretiereinrichtung aus einem, in einer zur Grundfläche (3) senkrecht angeordneten Drehachse (1) gelagerten, einen Sperrarm(21) und einen Schubarm (23) aufweisenden Hebel (2) und aus einem in einem Winkel zur Grundfläche (3) bewegbar angeordneten, über ein keilgetriebe (90, 93) mit dem Schubarm (23) verbundenen und mindestens drei Drehkörper (5, 6) aufweisenden Träger (4) besteht, dass die Auswerfeinrichtung aus einem mit dem Hebel (2) verbundenen Auswerfarm (22) und einem daran angebrachten Mitnehmer (7) besteht, und dass der Hebel (2) mit einem zwei stabile Zustände einnehmenden Federelement (8) verbunden ist.

2. Verriegelungseinrichtung nach Anspruch 1, gekennzeichnet durch eine Pufferstrecke (35) zwischen dem Mitnehmer (7) und der Stirnseite (20) der Magnetbandkassette (18).

3. Verriegelungseinrichtung nach Anspruch 1 oder 2, dadurch gekennzeichnet, dass das Keilgetriebe (90, 93) aus einem am Träger (4) angeordneten, eine schräge Ebene bildenden Lappen (93) und aus einem am Schubarm (23) angeordneten Keil (90) besteht.

4. Verriegelungseinrichtung nach Anspruch 3, dadurch gekennzeichnet, dass der Hebel (2), zumindest jedoch der an ihm angebrachte Keil (90), aus einem Kunststoffmaterial mit guten Gleiteigenschaften besteht.

5. Verriegelungseinrichtung nach Anspruch 3 oder 4, dadurch gekennzeichnet, dass der Keil (90) eine Kugellagerung mit einem Lagergehäuse (91) und mindestens einer Kugel (92) aufweist.

6. Verriegelungseinrichtung nach einem der vorhergehenden Ansprüche, gekennzeichnet durch zwei vordere Drehkörper (5) und einem hinteren Drehkörper (6), durch zwei über den vorderen Drehkörper (5) angeordnete vordere Durchgriffe in der Grundfläche (3) und durch einen über den hinteren Drehkörper (6) angeordneten hinteren Durchgriff.

7. Verriegelungseinrichtung nach Anspruch 6, dadurch gekennzeichnet, dass die vorderen Drehkörper (5) jeweils eine über den Träger (4) hinausreichende Achsverlängerung (51) aufweisen, und dass das Gehäuse (31) zwei vertikal verlaufende Nuten zur Aufnahme jeweils einer Achsverlängerung (51) aufweist.

8. Verriegelungseinrichtung nach einem der Ansprüche 6 oder 7, dadurch gekennzeichnet, dass die vorderen Drehkörper (5) und vorderen Durchgriffe so angeordnet sind, dass jeweils ein vorderer Drehkörper (5) und ein vorderer Durchgriff bei einer vollständig in den Einschubkanal eingeführten Magnetbandkassette (18) unterhalb eines Eingriffes (13) liegen.

9. Verriegelungseinrichtung nach Anspruch 8, dadurch gekennzeichnet, dass die vorderen Durchgriffe zumindest über die Vorderkante (130) des jeweiligen Eingriffs (13) hinaus verlängert sind.

10. Verriegelungseinrichtung nach Anspruch 6, dadurch gekennzeichnet, dass der hintere Drehkörper (6) und der hintere Durchgriff in der Nähe des hinteren Referenzanschlages (37) angeordnet sind.

**Claims**

1. A locking device for a magnetic tape cassette (18), which has two recesses (13) for rotary bodies (5,6) on its underside, in an insertion channel of a magnetic tape device which has a rectangular base (3), having a retention device for holding the magnetic tape cassette in a reference position and having an ejecting device, characterised in that the retention device consists of a lever (2) having a fixed axis of rotation (1) arranged at right angles to the base (3), a blocking arm (21) and a push arm (23), and consists of a support (4) arranged so as to be movable at an angle to the base (3), which is connected to the push arm (23) by means of a wedge drive (90,93) and which has at least three rotary bodies (5,6), that the ejecting device consists of an ejecting arm (22) connected to the lever (2), and of a carrier (7) secured to the latter and that the lever (2) is connected to a spring element (8) which occupies two stable states.

2. A locking device as claimed in Claim 1, characterised by a buffer path (35) between the carrier (7) and the end face of the magnetic tape cassette (18).

3. A locking device as claimed in Claim 1 or 2, characterised in that the wedge drive (90, 93) consists of a lug (93) arranged on the support (4) to form a slanted plane, and a wedge (90) arranged on the push arm (23).

4. A locking device as claimed in Claim 3, characterised in that the lever (2) or at least the wedge (90) secured thereto, consists of a synthetic resin material having good sliding properties.

5. A locking device as claimed in Claim 3 or 4, characterised in that the wedge (90) comprises a ball bearing support with a bearing housing (91) and at least one ball (92).

6. A locking device as claimed in one of the preceding Claims, characterised by two front rotary bodies (5) and one rear rotary body (6), by two front openings in the base (3) which are arranged above the front rotary bodies (5), and by a rear opening arranged above the rear rotary body (6).

7. A locking device as claimed in Claim 6, characterised in that the front rotary bodies (5) have respective axle extensions (51) which project beyond the support (4), and that the housing (31) has two vertically extending grooves, each serving to accommodate one axle extension (51).

8. A locking device as claimed in one of Claims 6 or 7, characterised in that the front rotary bodies (5) and front openings are so arranged that a respective front rotary body (5) and a front opening are arranged below a recess (13) when a magnetic tape cassette (18) is completely inserted into the insertion channel.

9. A locking device as claimed in Claim 8, characterised in that the front openings extend at least beyond the front edge (130) of the respective recess (13).

10. A locking device as claimed in Claim 6, characterised in that the rear rotary body (6) and the rear opening are arranged in the vicinity of the rear reference stop (37).

**Revendications**

1. Dispositif de verrouillage pour une cassette à bande magnétique (18), comportant dans sa face inférieure deux encoches (13) pour des corps de pression (5, 6), dans un canal d'insertion, à surface de base rectangulaire (3), d'un appareil à bande magnétique, du type à dispositif d'arrêt pour maintenir la cassette à bande magnétique dans une position de référence et à dispositif d'éjection, caractérisé par le fait que le dispositif d'arrêt est constitué par un levier (2) monté sur un axe de rotation (3) disposé perpendiculairement à la surface de base (3) et comportant un bras de verrouillage (21) et un bras de poussée (23), ainsi que par un élément de support (4) disposé de manière à pouvoir se déplacer angulairement par rapport à la surface de base (3), relié par une transmission à coins (90, 93) au bras de poussée (23) et comportant au moins trois corps de roulement (5, 6), que le dispositif d'éjection est constitué par un bras d'éjection (22) relié au levier (2) et par un entraîneur (7) qui y est monté, et que le levier (2) est relié à un élément élastique (8), capable d'assumer deux états stables.

2. Dispositif de verrouillage selon la revendication 1, caractérisé par une course-tampon (35) entre l'entraîneur (7) et la face frontale (20) de la cassette à bande magnétique (18).

3. Dispositif de verrouillage selon la revendication 1 ou 2, caractérisé par le fait que la transmission à coins (90, 93) est constituée par une languette (83) disposée sur le support (4) et constituant une surface oblique, et par un coin (90) disposé sur le bras de poussée (23).

4. Dispositif de verrouillage selon la revendication 3, caractérisé par le fait que le levier (2) ou au moins le coin (90) qui y est formé, est constitué par un matériau plastique ayant de bonnes propriétés de glissement.

5. Dispositif de verrouillage selon la revendication 3 ou 4, caractérisé par le fait que le coin (90) comporte un palier à billes constitué par un boîtier de palier (91) et par au moins une bille (92).

6. Dispositif de verrouillage selon l'une des revendications précédentes, caractérisé par deux corps de roulement antérieurs (5) et par un corps de roulement postérieur (6), par deux passages ménagés dans la surface de base (3), au-dessus des corps de roulement antérieurs (5) et par un passage postérieur disposé au-dessus du corps de roulement postérieur (6).

7. Dispositif de verrouillage selon la revendication 6, caractérisé par le fait que les corps de roulement antérieurs (5) comportent, chacun, un prolongement d'axe (51) qui s'étend au-delà du support (4), et que le boîtier (31) comporte deux gorges, s'étendant verticalement, pour recevoir respectivement un prolongement d'axe (51).

8. Dispositif de verrouillage selon l'une des revendications 6 ou 7, caractérisé par le fait que les corps de roulement antérieurs (5) et les passages antérieurs sont disposés de telle façon que respectivement un corps de roulement antérieur (5) et un passage antérieur se situent en-dessous d'une encoche (13) lorsqu'une cassette à bande magnétique (18) est complètement insérée dans le canal d'insertion.

9. Dispositif de verrouillage selon la revendication 8, caractérisé par le fait que les passages antérieurs sont prolongés au moins au-delà du bord antérieur (130) de l'encoche correspondante (13).

10. Dispositif de verrouillage selon la revendication 6, caractérisé par le fait que le corps de roulement postérieur et l'encoche postérieure sont disposés dans le voisinage de la butée de référence postérieure (37).

0 061 767

FIG 1

FIG 2

# FIG 3

# FIG 4

0 061 767

FIG 5

0 061 767